# EUROPEAN PATENT SPECIFICATION

(11) **EP 2 053 000 B1**
(45) Date of publication and mention of the grant of the patent: **18.05.2011**
(21) Application number: 08166468.2
(22) Date of filing: 13.10.2008
(51) Int. Cl.: B65G 63/02

(54) **System and method for unloading and loading load-containing units from and onto railway trucks**
System und Verfahren zum Abladen und Beladen von ladehaltigen Einheiten von und auf Schienenfahrzeuge
Système et procédé pour charger et décharger des unités contenant des charges sur des chariots sur rails

(30) Priority: 24.10.2007 IT MI20072057
(43) Date of publication of application: 29.04.2009
(73) Proprietor: Salmoiraghi S.p.A., 20052 Monza (IT)
(72) Inventor: SALMOIRAGHI, Sandro, 20052, MONZA (IT)
(74) Representative: Ripamonti, Enrico

(56) References cited:
- EP-A- 0 564 555
- WO-A-2006/119955
- WO-A-2007/051631
- US-A1- 2004 013 504

## Description

The present invention relates to a device and method for unloading and loading load-containing units from and onto railway trucks.

In the state of the art, products of various types are transported in load-containing units, for example containers, which present eight lift blocks in standard positions at the vertices of a parallelepiped. These load-containing units are transported on suitable ships and then transferred onto trains and rubber-tyred vehicles.

Although load-containing units can be easily unloaded from and loaded onto road trucks and rubber-tyred vehicles by a crane, for example a bridge crane, their unloading from and loading onto railway trucks is hindered by the electric line powering the locomotive, which does not allow a crane to operate from above.

This impossibility results in the need to detach the electric locomotive from the train, attach a diesel locomotive and drag the train to a non-electrified railway parking area where the containers are loaded/unloaded by cranes or other equipment which could not operate if the electric power line is present.

To solve these problems, EP 1476341 describes a device comprising means for horizontally transferring the load in different directions by generally using rollers, belts, wheels or chains.

US 4093084A describes an installation for horizontally moving containers from or by a railway truck. The movement is obtained by rollers disposed both on the goods transport trucks and on the railway platforms.

FR 2649948A describes a vehicle transport installation comprising boxes, similar to load-containing units, on which the vehicles are disposed. The boxes are moved horizontally by wheels or by a rack disposed both on the train platforms and on the truck panels.

DE 4301019 A describes a loading and unloading device for trains comprising panels to be loaded onto trucks, to be moved transversely to the truck direction and be locked. The invention also comprises bridges enabling the panels to overcome the separation between the truck and platform.

WO 2007/051631 A1 describes a system for unloading and loading load-containing units according to the preamble of claim 1.

These devices and methods for loading and unloading onto and from railway trucks are implemented by modifying the railway trucks, by inserting for example rollers of longitudinal axis which should enable the containers to be moved horizontally. These solutions are however of difficult implementation, as traditional containers are not made to be rested on the ground but instead exclusively on the four lower (base) lift blocks or coupled to the four upper blocks, and might not withstand their loaded weight. Moreover, modifying railway trucks and containers is extremely costly and the result is of poor flexibility.

An object of the present invention is therefore to provide a system and method enabling said drawbacks to be overcome, a particular object being to provide a system and method for unloading and loading load-containing units provided with lift blocks from and onto railway trucks intended to move along a track overlaid by an electric power line.

Another object is to accelerate the unloading and loading of load-containing units from and onto railway trucks without having to move them away from said track overlaid by the electric power line.

Said objects are attained by a system and method the inventive characteristics of which are highlighted by the claims.

The invention will be more apparent from the ensuing detailed description, provided by way of non-limiting example, of one embodiment thereof illustrated in the accompanying drawings, in which:
Figures from 1 to 6 are perspective views showing the sequence involved in unloading a load-containing unit from a railway truck;
Figure 7 is a section through the system of the invention;
Figure 8 shows the lift block arrangement of a generic load-containing unit;
Figure 9 shows the load-containing unit resting on the transfer trucks;
Figures from 10 to 12 show a part of the handling process for the load-containing units 2.

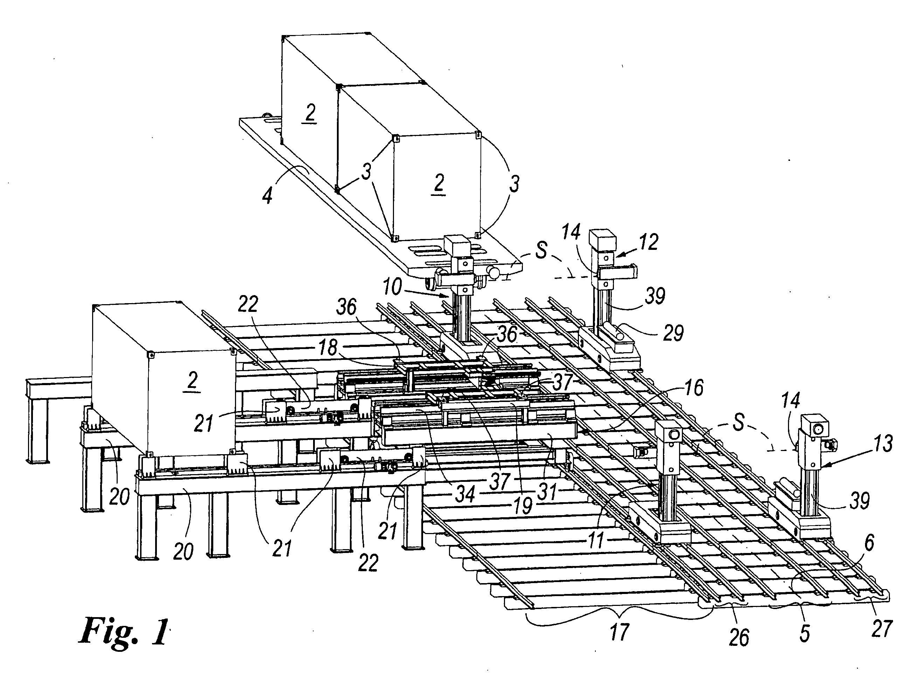

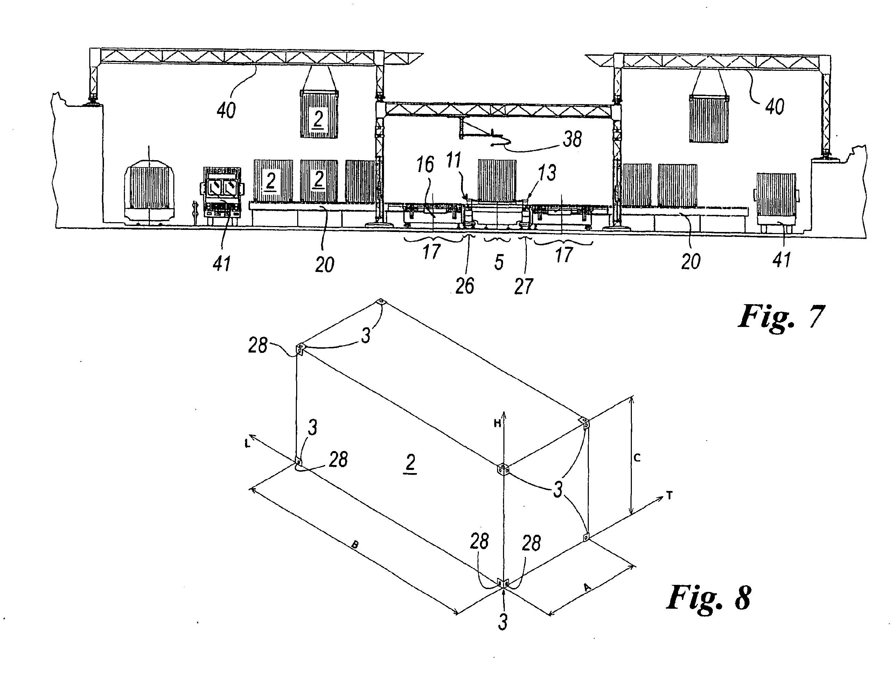

With reference to Figures from 1 to 6, these show a railway truck 4 arranged to move on a main track 5 along a longitudinal travel axis 6 shown substantially at the centre of the main track 5. In Figure 1 the railway truck 4 is arriving in the station in which the load-containing units 2, disposed on it, are to be unloaded and disposed on a stand-by platform 20, from which they are withdrawn by a crane or other means and disposed for example on rubber-tyred vehicles for intensive distribution of the goods. The load-containing units can be normal containers, which are mainly constructed in two different dimensions (20 and 40 feet in length) or open or closed mobile boxes defining a volume within which the goods are placed. These load-containing units each present eight lift blocks 3 disposed at the vertices of a parallelepiped with sides of predetermined length: four upper blocks (lying in a plane parallel to the plane TL and distant C from it) and four base blocks (lying in the plan e TL), the lift blocks defining the transverse T (width A), longitudinal L (length B) and vertical H (height C) directions, as shown in Figure 8. The positions, the form and the dimensions of these lift blocks are standardized for all the load-containing units. The parallelepipeds at the vertices of which the eight lift blocks are positioned are mainly of two sizes, with their major side (length B) of 20 feet and 40 feet, even though different sizes exist. The invention is able to operate with load-containing units of any length, including non-standard, provided with lift blocks. These lift blocks 3 present three free surfaces each normal to the other two, to form a vertex of the parallelepiped. All three free surfaces also present coupling holes 28 of standard position and size for coupling and lifting, for example by a crane.

The system of the invention comprises two secondary tracks 26 and 27 disposed on the two sides of the main track 5, one to the right and one to the left and extending at least for a portion parallel to the main track 5, four lifting members 10-13 arranged to flank the load-containing unit 2 on opposite sides about the main track 5, two of these 10 and 11 moving on one of the secondary tracks 26 and the other two 12 and 13 moving on the other secondary track 27. Each lifting member 10-13 comprises a lifting pin 14 having an axis S disposed horizontally in a plane substantially normal to the longitudinal travel axis 6. These lifting pins 14 are arranged to translate in a vertical direction on the lifting member and to slide in the direction of their axis S, to engage in the coupling holes 28 of the lift blocks 3.

Each lifting member 10-13 comprises a recognition device of optical or other type, to automatically recognize the coupling holes 28 of the lift blocks 3 and to automatically position the lifting members 10-13 in proximity to the lift blocks 3 in a position suitable for inserting the lifting pins 14 into the coupling holes 28.

The four lifting members 10-13 are arranged to flank the railway truck 4 on which the load-containing unit 2 is disposed, by moving independently to recognize the coupling holes 28 of the lift blocks 3, to insert the lifting pins 14 into the coupling holes 28 and to vertically lift or translate the load-containing unit 2 by achieving a grip on four lift blocks 3 disposed in pairs on opposite sides about the longitudinal travel axis 6. The vertical translation action of the load-containing unit 2 is achieved by a simultaneous coordinated movement of the lifting pins 14, even though a less stable grip can be obtained on only three lift blocks.

The lifting members 10-13, being separate, moving on opposite sides of the main track 5 and being situated completely outside the limiting railway outline which defines the maximum train cross-section, do not interfere with the movement of the railway truck 4, nor with the electric power line 38 disposed above the main track 5 (see Figure 7).

It is also possible to have only two lifting members each provided with two lifting pins suitably spaced apart in a horizontal direction, the two lifting members being arranged to move on different secondary tracks 26 and 27, in such a manner as to be able to flank the load-containing unit 2 on two opposite sides about the longitudinal travel axis 6. The two lifting members are separate in the sense that they are not joined together by any mechanical element disposed in the space above the main track. Both however rest on the ground or on a possible common platform disposed below the rails of the main track. However this form of construction allows less flexibility as the system would be suitable for lifting only one type of load-containing unit, with lift blocks disposed in a single predetermined configuration, or would require greater technical complexity of the lifting members by providing for an independent horizontal movement, parallel to the longitudinal travel axis 6, of two lifting pins 14 located in the same lifting member.

The lifting members could also be fixed and the lifting pins be aligned with the lift blocks of the load-containing units by precisely positioning the railway truck.

This solution clearly makes the method more complicated and does not represent a preferred embodiment.

The lifting members 10-13 could also move horizontally in a direction parallel to the main track 5, not guided by secondary tracks 26 and 27 but instead guided for example by a laser guide system or other known guide system. It should be noted that the system is particularly suitable for operating on a main track which is rectilinear or has a radius of curvature compatible with railway regulations.

The system of the invention also comprises a transfer track 17 parallel to the main track 5, disposed such as to leave one of the two secondary tracks 26 between the main track 5 and the transfer track 17. Two transfer trucks 15 and 16 move independently on the transfer track 17, each comprising a base 30 and 31, a movable bridge 33 and 34 able to move in a direction substantially transverse to the main track 5 and to the transfer track 17 parallel to it, i.e. substantially horizontal in a plane normal to the longitudinal travel axis 6, and a transfer truck 18 and 19 movable on the base 30, 31 and on the movable bridge 33 and 34, in a direction transverse to the main track 5.

With the load-containing unit 2 lifted by the lifting members 10-13, the transfer trucks 15, 16, by moving on the transfer track 17, flank the lifting members 10, 11 disposed on the secondary track 26 interposed between the main track 5 and transfer track 17.

The system of the invention comprises resting elements 29, rigid with the lifting members 12 and 13 and disposed on the opposite side to that of the transfer trucks 15 and 16 about the main track 5. These resting elements are arranged to support one end of the movable bridges 33 and 34 on the opposite side to that of the transfer trucks 15 and 16 about the main track 5. The movement of the movable bridges 33 and 34 is of sufficient travel to cause one of their ends to touch and rest on said resting elements 29. In this manner the transfer trucks 18 and 19, with their load consisting of the load-containing unit 2, are able to slide on the movable bridges 33 and 34, which do not project but are supported on both the ends external to the load. At least those lifting members 10 and 11 disposed on the same side of the transfer trucks 15 and 16 about the main track 5 have a shape such as to enable the movable bridges 33 and 34 and the transfer trucks 18 and 19 to pass below their lifting pins 14, i.e. within the space lying vertically below the lifting pins 14.

For this purpose, in the embodiment shown in Figures 1-6, each lifting pin 14 is skew to the vertical column 39 of the lifting member resting on a secondary track 26 or 27, in this manner leaving free the space below the lifting pins 14.

The system of the invention comprises, preferably in the resting elements 29, a levelling device for each of the movable bridges 33 and 34, able to vertically move the end of the movable bridges 33 and 34 resting on them, such as to cause the movable bridges 33 and 34 to attain a perfectly horizontal position enabling the transfer trucks 18 and 19 moving on them to move horizontally.

The presence of two independent transfer trucks 15 and 16 confers greater flexibility on the system, so enabling load-containing units of different dimensions to be loaded and unloaded.

If only two lifting members each with two lifting pins were provided, the system flexibility would be limited, in which case a single transfer truck could be provided, of size suitable for the length of the load-containing unit for which the system has been designed.

The transfer trucks 18 and 19, arranged to move on the movable bridges 33 and 34 in a direction substantially transverse to the main track, each present one or two resting surfaces 36 and 37 facing upwards, to hence support two basic lift blocks 3 disposed in a transverse direction.

The loading and unloading system of the invention also comprises at least one stand-by platform 20 presenting elements 21 for supporting the load-containing units 2 via the lift blocks 3 and which extend in a direction substantially transverse to the main track 5, at least within the initial portion facing the main track 5.

These support elements 21 can comprise for example tracks spaced apart such as to enable only the lift blocks 3 or vertically disposed flat elements to rest. Several different stand-by platforms could exist, able to receive load-containing units of different length, which present lift blocks positioned according to the length of the load-containing units. On each stand-by platform 20 there are disposed two positioning trucks 22 arranged to move horizontally along the entire length of the stand-by platform 20. They comprise two vertically movable pistons presenting a horizontal loading surface 25 and are also able to vertically translate the load-containing unit 2 by raising the loading surface 25 and resting it on the outer part of the lower surface of the lift blocks 3, whereas the support elements 21 rest on the inner part of the lower surface of the lift blocks 3 or vice versa. The positioning trucks 22 present only a very small vertical movement, sufficient however to withdraw the load-containing unit from the transfer trucks 18 and 19 and deposit them on the support elements of the stand-by platform 20.

It is also clear that in a different embodiment, two positioning trucks intended to move on a single stand-by platform to move the same load-containing unit could be replaced by a single positioning truck.

The stand-by platform 20 and the movable bridge 18 achieve mutual co-penetration equal at least to the width A of a load-containing unit 2 and such as to enable the transfer trucks 18 and 19 to flank the positioning trucks 22. The stand-by platform 20 is also able to support one end of the movable bridges 33 and 34 when the movable bridges 33 and 34 extend in the direction of the stand-by platform 20, to co-penetrate it. In this manner the transfer trucks 18 and 19, with their load consisting of the load-containing unit 2, can slide on the movable bridges 33 and 34, which do not project, but are supported on both the ends relative to the load. A multiplication of the system elements is possible to accelerate the loading and unloading operations, for example two transfer tracks can be provided disposed on opposite sides of the main track, on each of which two or four or more transfer trucks move, as shown in Figure 7. The stand-by platforms could also be disposed on both sides of the main track.

By virtue of the automatic recognition system for the lift blocks 3 and coupling holes 4, the system of the invention could also be used for load-containing units presenting lift blocks 3 not disposed in one of the two aforedescribed standard configurations.

Figures from 1 to 6 enable the system operation to be understood. Figure 1 shows a railway truck 4 with two load-containing units 2, which arrives in a station in which the unloading and loading system of the invention has been provided. The four lifting members 10-13, by moving along the secondary tracks 26, 27, define by means of a visual or other recognition system the position of four lift blocks 3 disposed on the lower base of the load-containing unit 2. The lifting members are positioned on the secondary tracks 26 and 27 to flank the lift blocks 3 such as to insert their lifting pin 14 into the coupling holes 28 disposed on the transverse faces (i.e. normal to the transverse direction) of the base lift blocks 3.

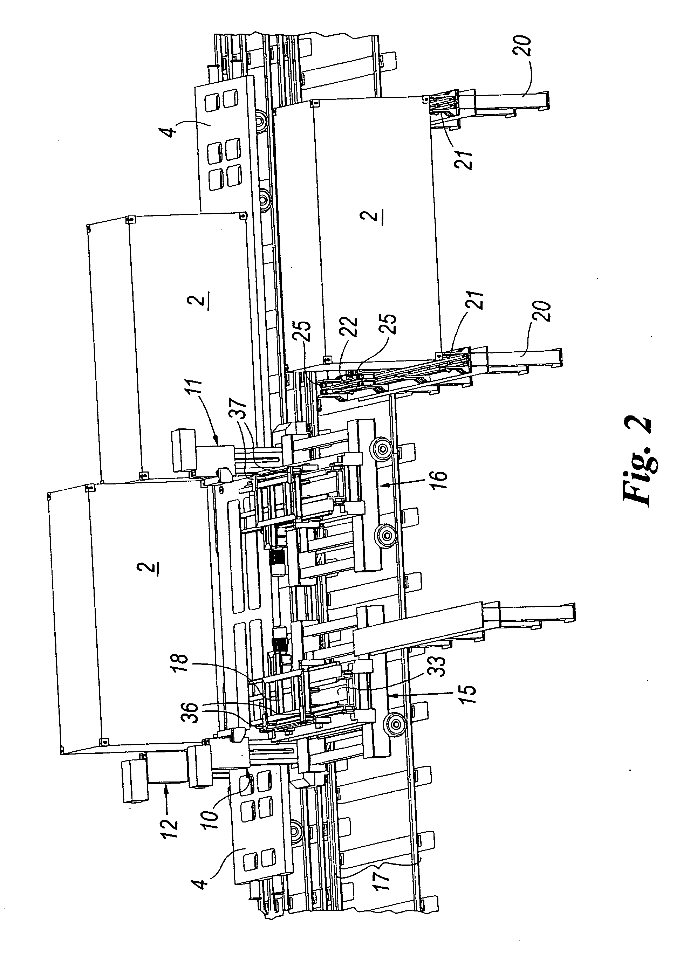

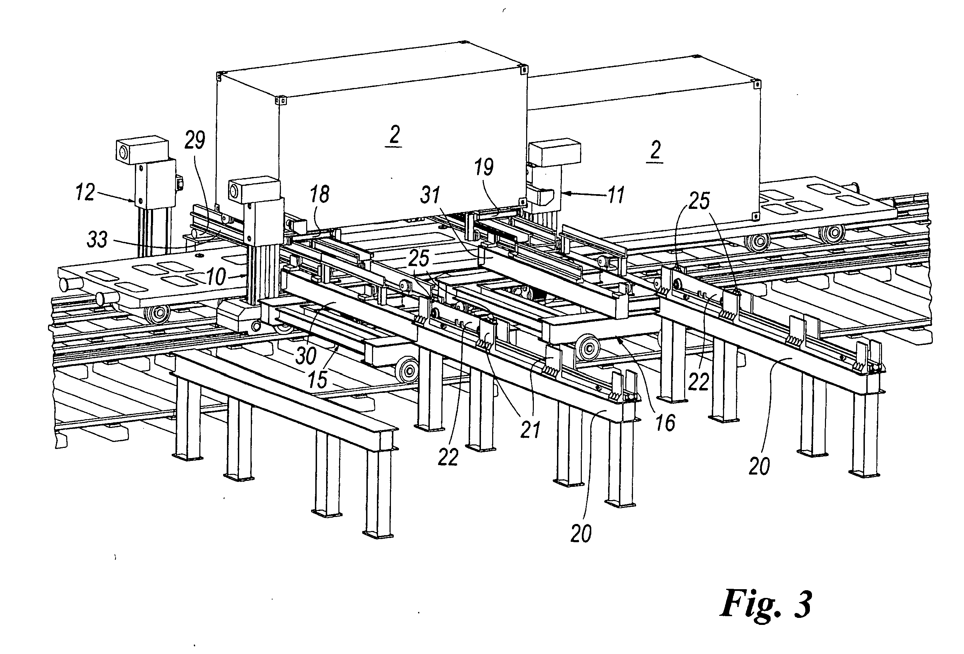

The lifting members 10-13 grip the lift blocks 3 by inserting the lifting pins 14 into the transverse coupling holes 28. Then the lifting members 10-13, by moving the four lifting pins 14 simultaneously upwards, raise the load-containing unit 2 to a prefixed height such as not to interfere with the electric power line 38 overlying the main track 5 (not shown in Figures 1-6, but shown in Figure 7). Meanwhile the two transfer trucks 15 and 16 flank the lifting members 10 and 11 disposed on the same side of the main track 5 (Figure 2). Figure 3 shows that the movable bridges 33 and 34 have been extended in the direction of the main track 5 until they touch and rest on the resting elements 29 rigid with the lifting members 12 and 13 disposed on the opposite side of the main track 5, by passing within the vertical space below the lifting pins 14. The transfer trucks 18 and 19 move along the movable bridges 33 and 34 to arrive below the load-containing unit 2.

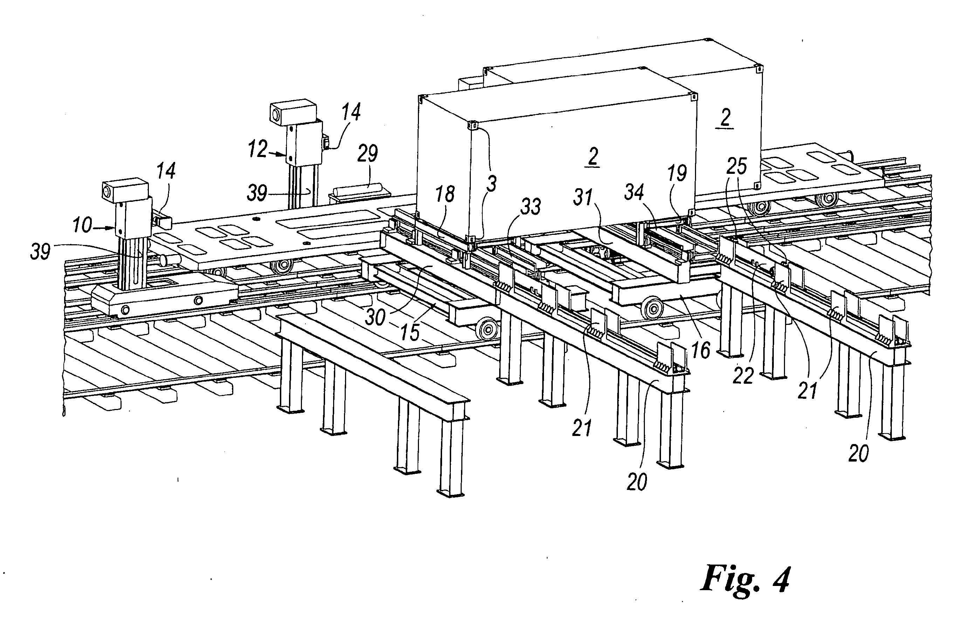

The transfer trucks 15 and 16 are positioned such that those resting surfaces 36 and 37 of the transfer trucks 18 and 19 facing upwards lie below a first part of the lower surfaces of the base lift blocks 3, i.e. the surfaces normal to the vertical direction (H) of Figure 8 of the base lift blocks disposed in the plane TL (Figure 8). In the example, the resting surfaces 36 and 37 of the transfer trucks 18 and 19 are disposed below the inner part of the lower surfaces of the lift blocks 3. The lifting members 10-13 transfer the load-containing unit downwards to rest it on the resting surfaces 36 and 37 of the transfer trucks 18 and 19. The lifting pins 14 disengage from the coupling holes 28 and the lifting members 10-13 move to enable the load-containing unit 2 to be transferred in the transverse direction onto the transfer trucks 18 and 19 until above the bases 30 and 31 of the transfer trucks 15 and 16 (Figure 4). The transfer trucks 15 and 16 move rigidly along the transfer track 17 to align with the stand-by platform 20 on which the load-containing unit 2 is to be deposited.

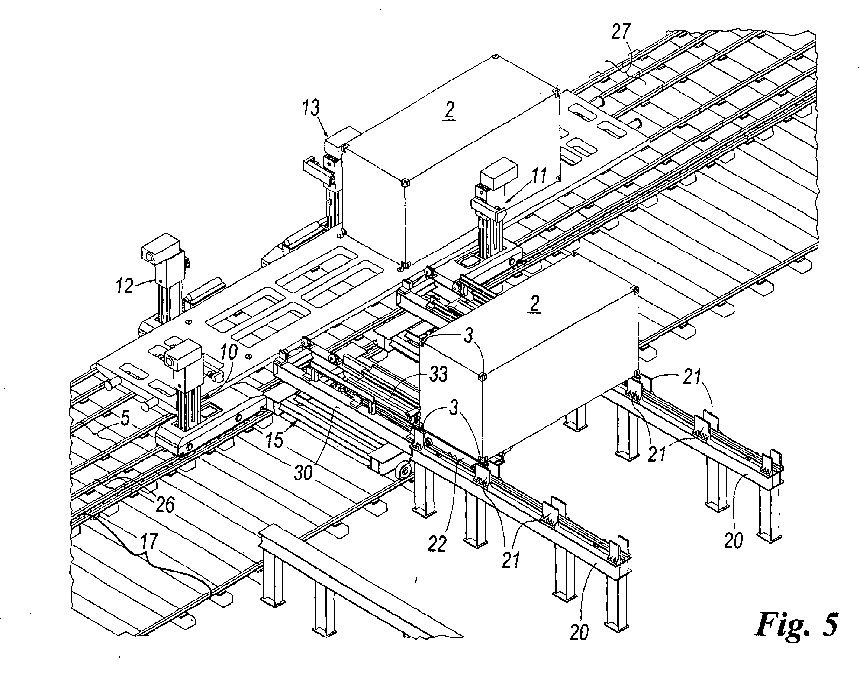

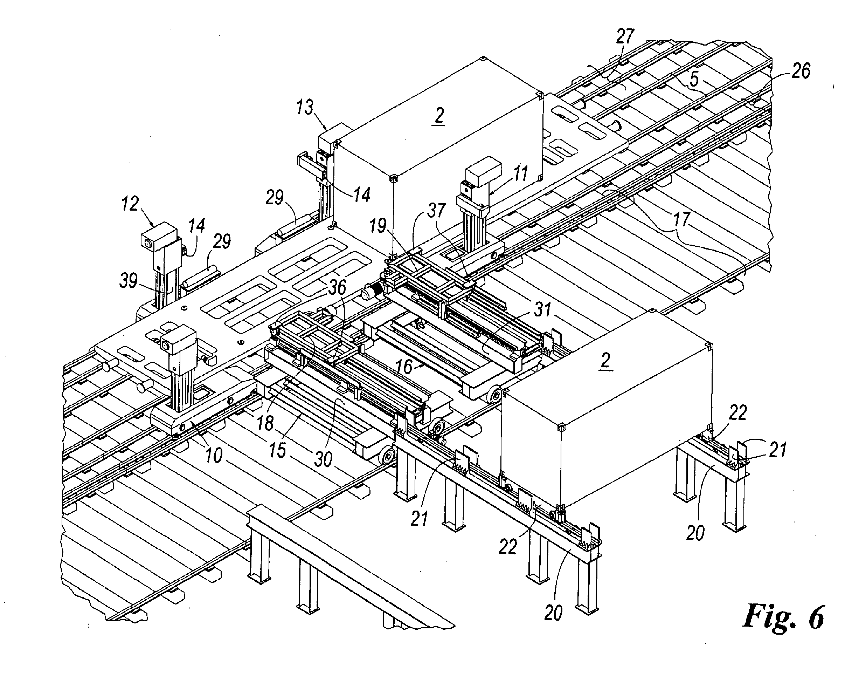

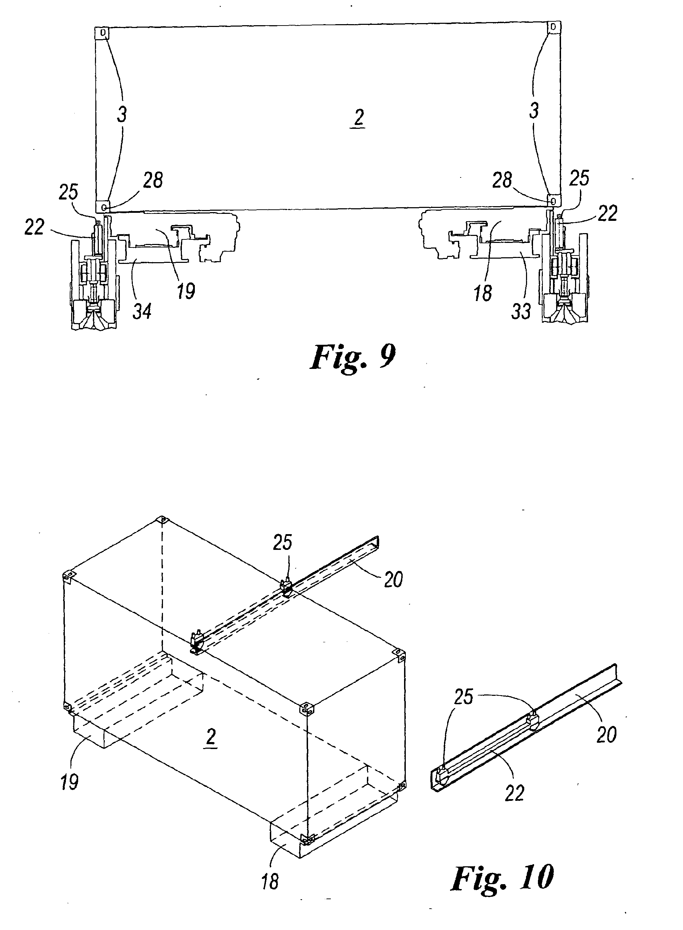

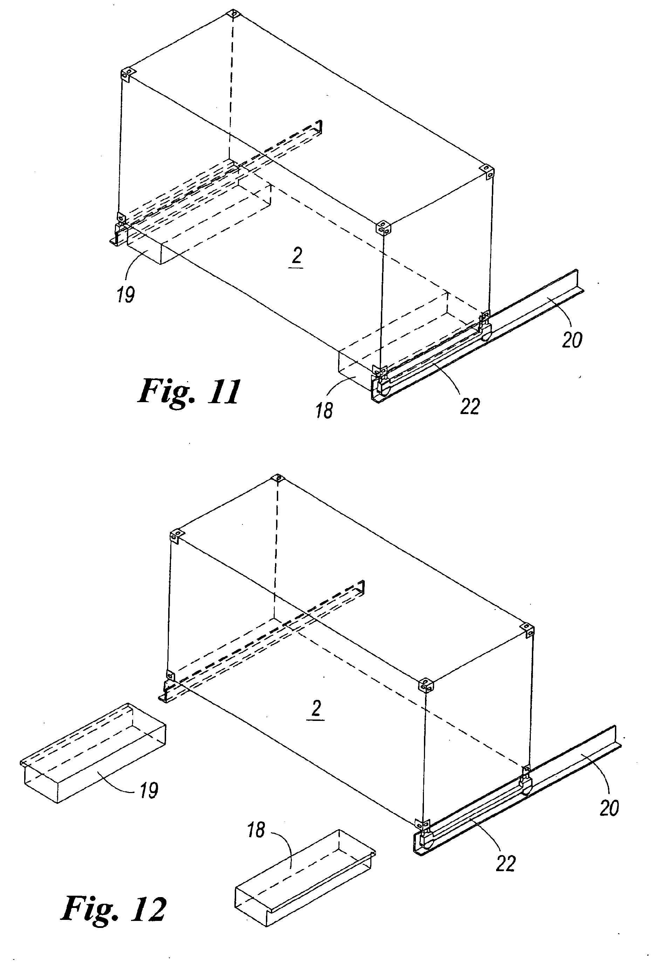

The movable bridges lengthen in the direction of the stand-by platform 20 to penetrate it through a portion substantially equal to the width A of the load-containing unit 2. The ends of the movable bridges 33 and 34 are supported by the stand-by platform 20, to prevent any projecting support of the movable bridges when the load-containing unit 2 transits on them. The transfer trucks 18 and 19 move on the movable bridges to horizontally transfer the load-containing unit until above the stand-by platform 20 (Figure 5). The positioning trucks move on the stand-by platform 20 to flank the transfer trucks 18 and 19 and position their loading surface 25 below the outer part of the lower surface of the base lift blocks, which rest with the inner part of their lower surface on the resting surfaces 36, 37 of the transfer trucks 18 and 19 (Figure 9). The positioning trucks 22 raise their loading surface 25 to hence vertically lift the load-containing unit 2 and translate horizontally, to deposit the load-containing unit 2 on the support elements 21 (Figure 6), which support the load-containing unit on the inner part of the lower surface of the base lift blocks 3. At the same time the transfer trucks 18 and 19 are returned onto the bases 30 and 31 of the transfer trucks 15 and 16, and the movable bridges 33 and 34 are also retracted onto the bases 30 and 31 of the transfer trucks 15 and 16. In this manner the transfer trucks 15 and 16 can be repositioned to unload another load-containing unit. The load-containing units 2 aligned on the stand-by platforms 20, not overlaid by the electric power line, can then be handled by a crane or other means, including self-propelled, for example a bridge crane 40 (shown in Figure 7), and transferred onto motorized trucks 41. The transfer of the load-containing units from the railway trucks 4 to the stand-by platforms 20 takes place automatically and rapidly, without interference with the railway electric power lines.

The movable bridges, when the load-containing unit transits on them, are never projectingly constrained, but are supported or constrained at both ends with respect to the load transiting on them. A levelling device for the movable bridges 33 and 34 is also advantageously present including on the stand-by platform 20, to ensure perfectly horizontal movement of the transfer trucks 18 and 19 when they transit on the movable bridges 33 and 34 while carrying the load-containing unit 2 from the bases of the transfer trucks 30 and 31 to the stand-by platform 20. Alternatively, such a levelling device for the movable bridges could also be present on the transfer trucks 15 and 16, to regulate the height of the ends of the movable bridges 33 and 34 located on them.

A railway truck can be loaded by a reverse sequence of operations, starting with load-containing units already disposed on the support elements 21 of a stand-by platform 20. Given that a precise arrangement of load-containing units on the stand-by platform is difficult to attain with a crane, the load-containing units could be arranged on the stand-by platform by a system similar to that initially described, comprising lifting members and transfer trucks for handling the arriving load-containing units which are to be loaded onto a railway truck.

It would also be possible for the transfer trucks 18 and 19 to translate vertically when the load-containing unit 2 passes from the lifting members 10-13 to the transfer trucks or from the transfer trucks 18 and 19 to the positioning trucks 22. However the device would be more complicated and redundant in its movements, as the vertical movement is provided by the lifting members above the main track and by the positioning trucks 22 above the stand-by platform.

Hence the present invention is also intended to protect a method for unloading and loading load-containing units 2 presenting lift blocks 3, from and onto railway trucks 4 arranged to move on a main track 5 along a longitudinal travel axis 6, implemented by a system such as that heretofore described, comprising four lifting members 10-13, each provided with a lifting pin 14, two transfer trucks 15 and 16 each comprising a base 30 and 31, a movable bridge 33 and 34, and a transfer truck 18 and 19 with a horizontal resting surface 36 and 37, the system also comprising at least one stand-by platform 20 provided with support elements 21, on which there are disposed positioning trucks 22 presenting a loading surface 25.

The unloading method presents the following steps:
a) four lifting members 10-13 are flanked against the load-containing unit 2, disposed in pairs on opposite sides about the main track 5;
b) four lift blocks 3 not superposed vertically and disposed in pairs on opposite sides about the longitudinal travel axis 6 are gripped by the lifting members 10-13 by inserting their lifting pins into the coupling holes 28 of the lift blocks 3;
c) the load-containing unit 2 is translated vertically by means of the lifting members 10-13;
d) the two transfer trucks 15 and 16 are flanked against the load-containing unit 2 on one side of the main track 5;
e) the movable bridges 33 and 34 are extended in the direction of the main track 5 until their ends rest on the resting elements 29 rigid with the lifting members 12 and 13 disposed on the opposite side to that of the transfer trucks 15 and 16 about the main track 5;
f) the transfer trucks 18 and 19 are moved on the movable bridge and disposed below the base lift blocks 3 of the load-containing unit 2, such that the lift blocks 3 project partially from the vertical through the resting surfaces 36 and 37, in the direction of the longitudinal travel axis 6;
g) the load-containing unit 2 is translated vertically downwards by the lifting members 10-13 by resting the lower surfaces of the lift blocks 3 on the resting surfaces 36 and 37 of the transfer trucks 18 and 19, such that they project partially from them in the direction of the longitudinal travel axis 6;
h) the lift blocks 3 are released from the grip of the lifting members 10-13 by extracting the lifting pins 14 from the coupling holes 28;
i) the transfer trucks 18 and 19 are translated horizontally with the load-containing unit 2 resting thereon, until the load-containing unit 2 is brought above the bases 30 and 31 of the transfer trucks 15 and 16;
j) the movable bridges 33 and 34 are retracted onto the bases 30 and 31 of the transfer trucks 15 and 16;
k) the transfer trucks 15 and 16 are moved rigidly until the load-containing unit 2 is brought to the side of the stand-by platform 20 and aligned with it;
l) the movable bridges 33 and 34 are extended in the direction of the stand-by platform 20 until the movable bridges 33 and 34 and the stand-by platform 20 are made to co-penetrate for a length at least equal to the width A of the load-containing unit 2, the transfer trucks 18 and 19 and the load-containing unit 2 disposed on them remaining substantially at rest on the bases 30 and 31 of the transfer trucks 15 and 16;
m) the movable bridges 33 and 34 are rested on the stand-by platform 20 on the opposite side to the main track 5;
n) the transfer trucks 18 and 19 and the load-containing unit 2 resting on them are translated horizontally on the movable bridges 33 and 34 until the load-containing unit 2 is brought above the stand-by platform 20;
o) two positioning trucks 22 are moved rigidly along the stand-by platform 20 until flanking the transfer trucks 18 and 19, such that the loading surface 25 of the positioning trucks 22 is disposed below the projecting part of the lower surface of the base lift blocks 3;
p) the loading surface 25 of the positioning trucks 22 is raised, so raising the load-containing unit 2 and releasing the transfer trucks 18 and 19;
q) the transfer trucks 18 and 19 are translated horizontally until they are brought above the bases 30 and 31 of the transfer trucks 15 and 16;
r) the movable bridges 33 and 34 are retracted onto the transfer trucks 15 and 16;
s) the load-containing unit 2 is transferred onto the stand-by platform 20 by means of the positioning trucks 22;
t) the load-containing unit 2 is deposited in a suitable position on the stand-by platform 20, by lowering the loading surface 25 of the positioning trucks 22 and resting the now free part of the lower surface of the lift blocks 3 on suitable support elements 21 of the stand-by platform 20.

The method of loading load-containing units 2 onto railway trucks 4 comprises a sequence of steps the reverse of that already described.

It commences with a situation in which the load-containing units 2 are disposed with the lift blocks 3 presenting a first part of the lower surface resting on the upper surface of suitable support elements 21 of one or more stand-by platforms 20 and a second part of the lower surface of the lift blocks 3 free. The railway truck 4 is on the main track 5.

The steps of the loading method are the following:
aa) two positioning trucks 22 are moved onto the stand-by platform 20, to bring the loading surface 25 of the positioning trucks 22 below that part of the lower surface of the lift blocks 3 projecting from the support elements 21;
bb) the loading surface 25 of the positioning trucks 22 is raised by raising the load-containing unit 2 from the support elements 21 by means of the support between the loading surface 25 and at least part of the lower surface of the lift blocks 3 previously projecting from the support elements 21;
cc) two transfer trucks 15 are flanked against the stand-by platform 20 between the stand-by platform 20 and the main track 5, they each comprising a base 30 and 31, a movable bridge 33 and 34 arranged to move in a direction substantially transverse to the main track 5, and a transfer truck 18 and 19 arranged to move on the movable bridge 33 and 34 and presenting a resting surface 36 and 37 for the lift blocks 3;
dd) the movable bridges are extended in the direction of the stand-by platform 20 until one end of them rests on it, the movable bridges 33 and 34 and the stand-by platform 20 co-penetrating for a distance equal to the width A of the load-containing unit 2;
ee) the transfer trucks 18 and 19 are translated horizontally on the movable bridges 33 and 34 until they are above the stand-by platform 20;
ff) the positioning trucks 22 and the load-containing unit 2 are translated as far as that end of the stand-by platform 20 facing the main track 5, such that the load-containing unit 2 is positioned above the transfer trucks 18 and 19;
gg) the loading surface 25 of the positioning trucks 22 is lowered to make those parts of the lower surface of the lift blocks 3 projecting from the loading surface 25 rest on the resting surfaces 36 and 37 of the transfer trucks 18 and 19;
hh) the transfer trucks 18 and 19 and the load-containing unit 2 resting on them are translated horizontally until they are brought above the bases 30 and 31 of the transfer trucks 15 and 16;
ii) the movable bridges 33 and 34 are retracted from the stand-by platform 20 onto the bases of the transfer trucks 15 and 16;
jj) the transfer trucks 15 and 16 are moved rigidly, so moving the load-containing unit parallel to the main track 5 until it flanks the railway truck 4, onto which the load-containing unit is deposited;
kk) two lifting members 12 and 13 disposed on the opposite side to that of the transfer trucks 15 and 16 about the main track 5 are moved onto the secondary track 27, in order to prepare them for supporting the movable bridges 33 and 34;
ll) the movable bridges 33 and 34 are extended in the direction of the main track 5 until their ends rest on the resting elements 29 rigid with the lifting members 12 and 13 disposed on the opposite side to that of the transfer trucks 15 and 16 about the main track 5, the transfer trucks 18 and 19 remaining substantially at rest on the bases 30 and 31 of the transfer trucks 15 and 16;
mm) the transfer trucks 18 and 19 are translated horizontally on the movable bridges 33 and 34 until the load-containing unit 2 rests on it above a railway truck 4 disposed on the main track 5 to the side of the transfer trucks 15;
nn) a further two lifting members 10 and 11 disposed on the opposite side to the two first lifting members 12 and 13 about the main track 5 are flanked against the load-containing unit 2;
oo) four lift blocks 3 not superposed vertically and disposed in pairs on opposite sides about the longitudinal travel axis 6 are gripped by the lifting members 10-13 by inserting their lifting pins 14 into the coupling holes 28 of the lift blocks 3;
pp) the load-containing unit 2 is raised vertically by means of the lifting members 10-13, to free the transfer trucks 18 and 19 from the weight of the load-containing unit 2;
qq) the transfer trucks 18 and 19 are translated horizontally on the movable bridges 33 and 34 until they are brought above the bases 30 and 31 of the transfer trucks 15 and 16;
rr) the movable bridges 33 and 34 are retracted to free the space underlying the load-containing unit 2 and the lifting members 10-13;
ss) the load-containing unit 2 is lowered by means of the lifting members 10-13 to deposit it on the railway truck 4, such that the lower corner blocks are engaged in any retention devices present on the railway truck;
tt) the grip on the lifting members 10-13 by the lift blocks 3 is released by extracting the lifting pins 14 from the coupling holes 28.

In this loading method the following stages corresponding to one or more of the aforedescribed steps are distinguished in particular:
I) the load-containing unit 2 is translated until it is brought above the railway truck 4 disposed on the main track 5;
II) at least two lifting members 10-13 disposed on opposite sides about the main track 5 are flanked against the load-containing unit 2;
III) four lift blocks 3 not vertically superposed and disposed in pairs on opposite sides about the longitudinal travel axis 6 are gripped by the lifting members 10-13 by inserting lifting pins into the coupling holes 28 of the lift blocks 3;
IV) the load-containing unit 2 is translated vertically by the lifting members 10-13, and deposited on the railway truck 4.

The system according to the invention comprises a control unit for controlling and coordinating the multiple movements of the various parts of the system and for implementing the aforedescribed unloading and loading methods.

A characteristic of the unloading and loading method of the invention is that at least two separate lifting members 10-13 disposed on opposite sides about the main track 5 are flanked against the load-containing unit 2 for vertically translating the load-containing unit 2 by achieving a grip on lift blocks 3. This enables interference between the lifting members 10-13 and the electric line disposed above the main track to be avoided and enables the lift blocks 3 to be used to support the weight of the load-containing unit.

Another important characteristic of the unloading and loading method of the invention is that the load-containing unit 2 is moved by resting a first part of the lower surface of the base lift blocks 3 on a first support surface, then resting a second part of the lower surface of the base lift blocks 3 on a second support surface. This characteristic of the method is shown in Figures from 10 to 12. The first or second support surface can comprise the resting surfaces 36 and 37 of the transfer truck 18 and 19, or the loading surfaces 25 of the positioning trucks 22, or again the upper surfaces of the support elements 21 of the stand-by platform 20. In this respect, the two transfer trucks 18 and 19 are each positioned below two lift blocks 3 such that only a first part of the lower surface of the lift blocks 3 goes to rest on the resting surfaces 36 and 37 of the transfer trucks 18 and 19, as clearly shown in Figure 9.

These resting surfaces 36 and 37 of the transfer trucks 18 and 19 also present vertical pins to be inserted into the lower coupling holes 28 for greater safety while moving the load-containing unit.

The transfer trucks 18 and 19 are then flanked by the positioning trucks 22, which lie below the load-containing unit 2 such that their loading surface 25 is positioned below the free part of the lower surface of the base lift blocks 3. The second part of the lower surface of the lift blocks 3 comprises at least part of the free surface, i.e. not directly resting on the resting surfaces 36 and 37 of the transfer trucks 18 and 19. The movement of the positioning truck 22 enables the weight of the load-containing unit 2 to pass from the transfer trucks 18 and 19 to the positioning truck 22, by resting the second part of the lower surface of the base lift blocks 3 on the loading surface 25 of the positioning truck 22. During this stage, the free surface comprises the initially rested surface. Subsequently, when the load-containing unit passes from the positioning truck 22 to the stand-by platform 20, a part of the now free surface is rested on the support elements 21.

This method enables the load-containing unit to be transferred from one mover member to another while always discharging the weight of the load-containing unit via the lift blocks 3 and without complicated manoeuvres requiring engagement in the coupling holes 28. Inserting pins into the coupling holes 28 is only required in that stage in which the load-containing unit 2 is to be raised from the railway truck 4 or rested on it, as the lower surface of the base lift blocks 3 is inaccessible during the entire operation.

By virtue of the fact that the method is implemented by an automatic system, the unloading of load-containing units from railway trucks and their arrangement on stand-by platforms takes place rapidly, with considerable gains in depot efficiency.

Moreover, as the load-containing units are moved only via the lift blocks 3, which are already standardized both in their shape and in their arrangement, no modifications are required either to the railway trucks or to the load-containing units.

## Claims

1. A system for unloading and loading load-containing units (2) presenting lift blocks (3) from and onto railway trucks (4) arranged to move on a main track (5) along a longitudinal travel axis (6), the system comprising at least two lifting members (10-13) separated at least in space above the main track (5), and able to flank the load-containing unit (2) on opposite sides about the main track (5) and to translate it vertically by achieving a grip on lift blocks (3), said lifting members (10-13) being movable horizontally in a direction parallel to the main track (5), two secondary tracks (26, 27) disposed on the two sides of the main track (5) and parallel to it, for moving the lifting members (10-13) being provided, each lifting member (10-13) comprising at least one lifting pin (14) presenting an axis (S) disposed horizontally in a plane substantially normal to the longitudinal travel axis (6), said lifting pin (14) being arranged to translate in the vertical direction and to slide in the direction of its axis (S), at least a first transfer truck (15, 16) movable in a direction parallel to the main track (5) being provided, the system further comprising at least one transfer track (17) parallel to the main track (5), for moving the first transfer truck (15, 16), said first transfer truck (15, 16) comprising a movable bridge (33, 34) to be moved substantially in a horizontal direction in a plane normal to the longitudinal travel axis (6), said at least one first transfer truck (15, 16) comprising a second transfer truck (18, 19) movable on the movable bridge (33, 34) in a direction substantially transverse to the main track (5), said second transfer truck (18, 19) presenting one or two resting surfaces (36, 37) to support the lift blocks (3) of the load containing unit (2), said resting surfaces (36, 37) facing upwards, the system being **characterised in that** it comprises at least two first transfer trucks (15, 16) disposed on the same side of the main track and movable independently to enable load-containing units of different dimensions to be loaded and unloaded, and **in that** it comprises a control unit for controlling and coordinating the multiple movements such that the two first transfer trucks (15, 16) are flanked against the load container unit (2).

2. A system for unloading and loading load-containing units (2) as claimed in claim 1, **characterised in that** each resting surface (36, 37) of the second transfer truck (18, 19) is suitable to support only a first part of a lower surface of the corresponding lift block (3).

3. A system for unloading and loading load-containing units (2) as claimed in claim 1, **characterised in that** each resting surface (36, 37) has a vertical pin to be inserted into a lower coupling holes (28) of the corresponding lift block (3) in order to safety move the load-containing unit.

4. A system for unloading and loading load-containing units (2) as claimed in claim 2, **characterised by** comprising at least one stand-by platform (20) presenting support elements (21) for supporting the load-containing units (2) via the lift blocks (3), at least one positioning truck (22) being movable along the stand-by platform (20), the positioning truck (22) having movable loading surfaces (25) suitable to rest on a second part of the lower surface of the lift blocks (3) and to vertically translate the load containing unit (2), the support elements (21) receiving said unit (2) from the loading surfaces (25) and resting on the first part of the lower surface of the lift blocks (3).

5. A system for unloading and loading load-containing units (2) as claimed in claim 1, **characterised in that** said positioning truck (22) is able to translate the load-containing unit (2) vertically and horizontally.

6. A system for unloading and loading load-containing units (2) as claimed in claim 4, **characterised in that** the stand-by platform (20) is arranged to support the movable bridge (33, 34) at one end.

7. A system for unloading and loading load-containing units (2) as claimed in claim 6, **characterised in that** the stand-by platform (20) and the movable bridge (33, 34) achieve a mutual co-penetration equal to the width (A) of the load-containing unit (2).

8. A system for unloading and loading load-containing units (2) as claimed in claim 1, **characterised in that** the lifting members (10-13) comprise a device for automatically recognizing the coupling holes (28) in the lift blocks (3).

9. A system for unloading and loading load-containing units (2) as claimed in claim 1, **characterised in that** at least one of the lifting members (10-11) has a shape such as to enable the second transfer truck (18, 19) to pass below the lifting pin (14).

10. A system for unloading and loading load-containing units (2) as claimed in claim 1, **characterised by** comprising at least one resting element (29) for supporting an end of the movable bridge (33, 34) on the opposite side to that of the first transfer truck (15, 16) about the main track (5).

11. A system for unloading and loading load-containing units (2) as claimed in claim 1, **characterised by** comprising a device for levelling the movable bridge (33, 34).

12. A system for unloading and loading load-containing units (2) as claimed in claim 1, **characterised by** comprising four lifting members (10-13), each of which is independently movable.

13. A method for unloading and loading load-containing units (2) with the system as claimed in any of the preceding claims.

## Patentansprüche

1. System zum Entladen und Beladen von Last enthaltenden Einheiten (2), an denen Hebeblöcke (3) vorgesehen sind, von und auf Schienenfahrzeuge (4), die ausgestaltet sind, um auf einer Hauptschiene (5) entlang einer Längsbewegungsachse (6) bewegt zu werden, wobei das System mindestes zwei Hebebauteile (10-13) aufweist, die zumindest räumlich über der Hauptschiene (5) getrennt und ausgestaltet sind, die Last enthaltende Einheit (2) an gegenüberliegenden Seiten über der Hauptschiene (5) zu flankieren und sie vertikal zu verlagern, indem ein Eingriff mit den Hebeblöcke (3) bewirkt wird, wobei die Hebebauteile (10-13) horizontal in einer Richtung parallel zur Hauptschiene (5) bewegbar sind, wobei zwei sekundäre Schienen (26, 27) vorgesehen sind, die an den beiden Seiten der Hauptschiene (5) und parallel dazu angeordnet sind, um die Hebebauteile (10-13) zu bewegen, wobei jedes Hebebauteil (10-13) mindestens einen Hebebolzen (14) aufweist, der eine Achse (S) hat, die in einer horizontalen Ebene und im Wesentlichen senkrecht zur Längsbewegungsachse (6) verlaufen, wobei der Hebebolzen (14) angeordnet ist, um in der vertikalen Richtung verlagert und in der Richtung seiner Achse (S) verschoben zu werden, wobei mindestens ein erstes Transferfahrzeug (15, 16) vorgesehen ist, das in einer Richtung parallel zu der Hauptschiene (5) bewegbar ist, wobei das System außerdem mindestens eine Transferschiene (17) parallel zu der Hauptschiene (5) aufweist, um das erste Transferfahrzeug (15, 16) zu bewegen, wobei das erste Transferfahrzeug (15, 16) eine bewegbare Brücke (33, 34) aufweist, um im Wesentlichen in einer horizontalen Richtung in einer Ebene senkrecht zur Längsbewegungsachse (6) bewegt zu werden, wobei das mindestens eine erste Transferfahrzeug (15, 16) ein zweites Transferfahrzeug (18, 19) aufweist, das auf der bewegbaren Brücke (33, 34) in einer Richtung im Wesentlichen quer zur Hauptschiene (5) bewegbar ist, wobei das zweite Transferfahrzeug (18, 19) eine oder zwei Auflageflächen (36, 37) hat, um die Hebeblöcke (3) der Last enthaltenden Einheit (2) abstützend zu halten, wobei die Auflageflächen (36, 37) nach oben zeigen, wobei das System **dadurch gekennzeichnet ist, dass** es mindestens zwei erste Transferfahrzeuge (15, 16) aufweist, die an der gleichen Seite der Hauptschiene angeordnet und unabhängig bewegbar sind, um zu ermöglichen, dass Last enthaltenden Einheiten verschiedener Abmessungen beladen und entladen werden können, und dass es eine Steuereinheit aufweist, um die mehreren Bewegungen zu steuern und zu koordinieren, so dass die beiden ersten Transferfahrzeuge (15, 16) gegen die Last enthaltende Einheit (2) flankiert sind.

2. System zum Entladen und Beladen von Last enthaltenden Einheiten (2) nach Anspruch 1, **dadurch gekennzeichnet, dass** jede Auflagefläche (36, 37) des zweiten Transferfahrzeugs (18, 19) geeignet ist, um lediglich einen ersten Bereich von einer unteren Fläche des entsprechenden Hebeblocks (3) abstützend zu halten.

3. System zum Entladen und Beladen von Last enthaltenden Einheiten (2) nach Anspruch 1, **dadurch gekennzeichnet, dass** jede Auflagefläche (36, 37) einen vertikalen Bolzen hat, um in ein unteres Kopplungsloch (28) des entsprechenden Hebeblocks (3) eingesetzt zu werden, um die Last enthaltende Einheit sicher zu bewegen.

4. System zum Entladen und Beladen von Last enthaltenden Einheiten (2) nach Anspruch 2, **dadurch gekennzeichnet, dass** es mindestens eine Bereitschaftsplattform (20), die Halteelemente (21) enthält, um die Last enthaltenden Einheiten (2) mittels der Hebeblöcke (3) abstützend zu halten, und mindestens ein Positionierfahrzeug (22) aufweist, das entlang der Bereitschaftsplattform (20) bewegbar ist, wobei das Positionierfahrzeug (22) bewegbare Ladeflächen (25) aufweist, die ausgestaltet sind, um auf einem zweiten Bereich der unteren Fläche der Hebeblöcke (3) aufzuliegen und um die Last enthaltende Einheit (2) vertikal zu verlagern, wobei die Halteelemente (21) die Einheit (2) von den Ladeflächen (25) empfangen und auf den ersten Bereich der unteren Fläche der Hebeblocks (3) aufsetzen.

5. System zum Entladen und Beladen von Last enthaltenden Einheiten (2) nach Anspruch 1, **dadurch gekennzeichnet, dass** das Positionierfahrzeug (22) ausgestaltet ist, um die Last enthaltende Einheit (2) vertikal und horizontal zu verlagern.

6. System zum Entladen und Beladen von Last enthaltenden Einheiten (2) nach Anspruch 4, **dadurch gekennzeichnet, dass** die Bereitschaftsplattform (20) ausgestaltet ist, um die bewegbare Brücke (33, 34) an einem Ende abstützend zu halten.

7. System zum Entladen und Beladen von Last enthaltenden Einheiten (2) nach Anspruch 6, **dadurch gekennzeichnet, dass** die Bereitschaftsplattform (20) die bewegbare Brücke (33, 34) ein gegenseitiges Eindringen gleich der Breite (A) der Last enthaltenden Einheit (2) bewirken.

8. System zum Entladen und Beladen von Last enthaltenden Einheiten (2) nach Anspruch 1, **dadurch gekennzeichnet, dass** die Hebebauteile (10-13) eine Vorrichtung zum automatischen Erkennen der Kopplungslöcher (28) in den Hebeblöcken (3) aufweisen.

9. System zum Entladen und Beladen von Last enthaltenden Einheiten (2) nach Anspruch 1, **dadurch gekennzeichnet, dass** mindestens eines der Hebebauteile (10-11) ein Form hat, um so zu ermöglichen, dass das zweite Transferfahrzeug (18, 19) unter den Hebebolzen (14) geschoben wird.

10. System zum Entladen und Beladen von Last enthaltenden Einheiten (2) nach Anspruch 1, **dadurch gekennzeichnet, dass** es mindestens ein Auflageelement (29) aufweist, um ein Ende der bewegbaren Brücke (33, 34) auf der dem ersten Transferfahrzeug (15, 16) gegenüberliegenden Seite über der Hauptschiene (5) abstützend zu halten.

11. System zum Entladen und Beladen von Last enthaltenden Einheiten (2) nach Anspruch 1, **dadurch gekennzeichnet, dass** es eine Vorrichtung zum Nivellieren der bewegbaren Brücke (33, 34) aufweist.

12. System zum Entladen und Beladen von Last enthaltenden Einheiten (2) nach Anspruch 1, **dadurch gekennzeichnet, dass** es vier Hebebauteile (10-13) aufweist, von denen jeder unabhängig bewegbar ist.

13. Verfahren zum Entladen und Beladen von Last enthaltenden Einheiten (2) mit dem System nach einem der vorhergehenden Ansprüche.

## Revendications

1. Système pour décharger et charger des unités contenant des charges (2) présentant des blocs de levage (3) à partir de, ou sur des wagons de manutention ferroviaires (4) agencés pour se déplacer sur une voie principale (5) le long d'un axe de déplacement longitudinal (6), le système comprenant au moins deux organes de levage (10 à 13) séparés au moins dans l'espace au-dessus de la voie principale (5), et capables de positionner l'unité contenant des charges (2) sur des côtés opposés autour de la voie principale (5) et de la translater verticalement en parvenant à saisir des blocs de levage (3), lesdits organes de levage (10 à 13) étant mobiles horizontalement dans une direction parallèle à la voie principale (5), deux voies secondaires (26, 27) disposées sur les deux côtés de la voie principale (5) et parallèles à celle-ci, pour déplacer les organes de levage (10 à 13) étant prévues, chaque organe de levage (10 à 13) comprenant au moins une goupille de levage (14) présentant un axe (S) disposé horizontalement dans un plan sensiblement normal à l'axe de déplacement longitudinal (6), ladite goupille de levage (14) étant agencée pour se translater dans la direction verticale et glisser dans la direction de son axe (S), au moins un premier chariot de transbordement (15, 16) mobile dans une direction parallèle à la voie principale (5) étant prévu, le système comprenant en outre au moins une voie de transbordement (17) parallèle à la voie principale (5), pour déplacer le premier chariot de transbordement (15, 16), ledit premier chariot de transbordement (15, 16) comprenant un pont mobile (33, 34) devant être déplacé sensiblement dans une direction horizontale dans un plan normal à l'axe de déplacement longitudinal (6), ledit au moins un premier chariot de transbordement (15, 16) comprenant un second chariot de transbordement (18, 19) mobile sur le pont mobile (33, 34) dans une direction sensiblement transversale à la voie principale (5), ledit second chariot de transbordement (18, 19) présentant une ou deux surfaces d'appui (36, 37) pour supporter les blocs de levage (3) de l'unité contenant des charges (2), lesdites surfaces d'appui (36, 37) étant tournées vers le haut, le système étant **caractérisé en ce qu'**il comprend au moins deux premiers chariots de transbordement (15, 16) disposés du même côté de la voie principale et mobiles indépendamment pour permettre à des unités contenant des charges de différentes dimensions d'être chargées et déchargées, et **en ce qu'**il comprend une unité de commande permettant de commander et coordonner les mouvements multiples de telle sorte que les deux premiers chariots de transbordement (15, 16) soient positionnés contre l'unité contenant des charges (2).

2. Système pour décharger et charger des unités contenant des charges (2) selon la revendication 1, **caractérisé en ce que** chaque surface d'appui (36, 37) du second chariot de transbordement (18, 19) est appropriée pour ne supporter qu'une première partie d'une surface inférieure du bloc de levage (3) correspondant.

3. Système pour décharger et charger des unités contenant des charges (2) selon la revendication 1, **caractérisé en ce que** chaque surface d'appui (36, 37) comporte une goupille verticale à insérer dans des trous de couplage inférieurs (28) du bloc de levage (3) correspondant afin de déplacer en toute sécurité l'unité contenant des charges.

4. Système pour décharger et charger des unités contenant des charges (2) selon la revendication 2, **caractérisé en ce qu'**il comprend au moins une plate-forme d'attente (20) présentant des éléments de support (21) permettant de supporter les unités contenant des charges (2) via les blocs de levage (3), au moins un chariot de positionnement (22) étant mobile le long de la plate-forme d'attente (20), le chariot de positionnement (22) comportant des surfaces de chargement mobiles (25) appropriées pour reposer sur une seconde partie de la surface inférieure des blocs de levage (3) et translater verticalement l'unité contenant des charges (2), les éléments de support (21) recevant ladite unité (2) depuis les surfaces de chargement (25) et reposant sur la première partie de la surface inférieure des blocs de levage (3).

5. Système pour décharger et charger des unités contenant des charges (2) selon la revendication 1, **caractérisé en ce que** ledit chariot de positionnement (22) est capable de translater verticalement et horizontalement l'unité contenant des charges (2).

6. Système pour décharger et charger des unités contenant des charges (2) selon la revendication 4, **caractérisé en ce que** la plate-forme d'attente (20) est agencée pour supporter le pont mobile (33, 34) à une extrémité.

7. Système pour décharger et charger des unités contenant des charges (2) selon la revendication 6, **caractérisé en ce que** la plate-forme d'attente (20) et le pont mobile (33, 34) accomplissent une copénétration mutuelle égale à la largeur (A) de l'unité contenant des charges (2).

8. Système pour décharger et charger des unités contenant des charges (2) selon la revendication 1, **caractérisé en ce que** les organes de levage (10 à 13) comprennent un dispositif permettant de reconnaître automatiquement les trous de couplage (28) dans les blocs de levage (3).

9. Système pour décharger et charger des unités contenant des charges (2) selon la revendication 1, **caractérisé en ce qu'**au moins l'un des organes de levage (10 à 11) a une forme telle qu'elle permet au second chariot de transbordement (18, 19) de passer sous la goupille de levage (14).

10. Système pour décharger et charger des unités contenant des charges (2) selon la revendication 1, **caractérisé en ce qu'**il comprend au moins un élément d'appui (29) permettant de supporter une extrémité du pont mobile (33, 34) du côté opposé à celui du premier chariot de transbordement (15, 16) autour de la voie principale (5).

11. Système pour décharger et charger des unités contenant des charges (2) selon la revendication 1, **caractérisé en ce qu'**il comprend un dispositif permettant de mettre à niveau le pont mobile (33, 34).

12. Système pour décharger et charger des unités contenant des charges (2) selon la revendication 1, **caractérisé en ce qu'**il comprend quatre organes de levage (10-13), dont chacun est indépendamment mobile.

13. Procédé pour décharger et charger des unités contenant des charges (2) avec le système tel que revendiqué dans l'une quelconque des revendications précédentes.
